# EUROPÄISCHE PATENTSCHRIFT

(11) **EP 2 779 822 B1**
(45) Veröffentlichungstag und Bekanntmachung des Hinweises auf die Patenterteilung: **06.04.2016**
(21) Anmeldenummer: 11782174.4
(22) Anmeldetag: 16.11.2011
(51) Int. Cl.: A01G 27/04

(54) **WASSERTRANSPORTLEITUNG UND BEWÄSSERUNGSEINRICHTUNG FÜR DIE TOPFPFLANZENBEWÄSSERUNG**
WATER TRANSPORTING LINE AND WATERING DEVICE FOR WATERING POTTED PLANTS
CONDUITE D'EAU ET SYSTÈME D'ARROSAGE DE PLANTES EN POTS

(43) Veröffentlichungstag der Anmeldung: 24.09.2014
(73) Patentinhaber: HUSQVARNA AB, 561 82 Huskvarna (SE)
(72) Erfinder: ASAL, Benjamin, 89155 Erbach-Ersingen (DE)
(74) Vertreter: Finkele, Rolf
(86) Internationale Anmeldenummer: PCT/EP2011/070297
(87) Internationale Veröffentlichungsnummer: WO 2013/071969

(56) Entgegenhaltungen:
- WO-A1-2009/132380
- DE-A1- 2 901 773
- DE-B- 1 064 281
- US-A- 5 329 729

## Beschreibung

Die Erfindung betrifft eine Wassertransportleitung mit einem nach dem Kapillareffekt wirkenden faserigen Material sowie eine Bewässerungseinrichtung für die Topfpflanzenbewässerung.

Für die Bewässerung von Topfpflanzen sind seit langem Wassertransportleitungen aus faserigem Material bekannt, welche durch die Wirkung des Kapillareffekts Wasser aus einem Vorratsbehälter entgegen der Schwerkraft zu einem höher gelegenen Pflanzsubstrat in einem Pflanzgefäß transportieren und dosiert an das Pflanzsubstrat abgeben.

In einfachster Ausführung sind solche Wassertransportleitungen aus Wollfäden oder aus anderen haushaltsüblichen Fasermaterialsträngen gebildet, welche auch durch wasserdichte Führungshüllen umgeben sein können, wie z.B. in der DE 2901773 A1 offenbart.

Aufwendigere Ausführungen von Bewässerungseinrichtungen weisen typischerweise einen Wasservorratsbehälter mit einem eine Topfstellfläche bildenden Deckel auf. Die Wassertransportleitung kann durch Öffnung des Wasservorratsbehälters aus diesem heraus und über den Topfrand des Pflanztopfes zu dem Pflanzsubstrat geführt sein.

Neben den fadenförmigen Wassertransportleitungen sind auch Ausführungen gebräuchlich, bei welchen das faserige Material ein Faserband bildet.

Die US 6675533 B2 zeigt eine Topfbewässerungseinrichtung mit abschnittsweise durch Kunststoffhüllen umgebenen Dochten. Bei einer aus der GB 654013 A bekannten Einrichtung sind Dochte von Gummiröhrchen umgeben.

Der Erfindung liegt die Aufgabe zugrunde, eine vorteilhafte Wassertransportleitung mit einem Faserband und eine Bewässerungseinrichtung mit einer solchen Wassertransportleitung anzugeben.

Erfindungsgemäße Lösungen sind in den unabhängigen Anspruch 1 und in Anspruch 13 beschrieben. Die abhängigen Ansprüche enthalten vorteilhafte Ausgestaltungen und Weiterbildungen der Erfindung.
Durch die Ausbildung der gegenüber liegenden bandförmigen Hüllwänden der schlauchförmigen flexiblen Hülle mit unterschiedlicher Biegesteifigkeit ergibt sich überraschenderweise auf einfache Art ein vorteilhaftes Biegeverhalten der schlauchförmigen Hülle mit erheblich reduzierter Knickneigung gegenüber Hüllen mit Hüllwänden gleicher Biegesteifigkeit. Die verringerte Knickneigung führt zu einem verbesserten ästhetischen Eindruck der Bewässerungseinrichtung und/oder gewährleistet einen reproduzierbar zuverlässigen Wassertransport.
Als Biegesteifigkeit sei dabei und im folgenden jeweils die Biegesteifigkeit gegen Biegen um eine zu einer Querrichtung der Hülle parallele Biegeachse verstanden. Die Querrichtung sei eine interne Koordinate der schlauchförmigen Hülle. Die aufgrund der Flexibilität der Hülle im Raum veränderliche Längsrichtung und die Flächennormale der im wesentlichen zur zweiten Hüllwand parallelen ersten Hüllwand bilden mit der Querrichtung ein nicht raumfestes internes orthogonales Koordinatensystem.

Die unterschiedliche Biegesteifigkeit der Hüllwände kann in erster Ausführungsform durch eine größere Wandstärke der ersten Hüllwand gegenüber der zweiten Hüllwand gegeben sein. In anderer Ausführung kann die erste Hüllwand eine andere Materialzusammensetzung aufweisen als die zweite Hüllwand. Insbesondere kann die erste Hüllwand zumindest teilweise aus einem zweiten Material bestehen, welches vorzugsweise durch einen höheren Elastizitätskoeffizienten eine größere materialspezifische Biegesteifigkeit besitzt als ein erstes Material, aus welchem die zweite Hüllwand besteht. Die Maßnahmen der unterschiedlichen Wanddicken und der unterschiedlichen Materialzusammensetzung der ersten und der zweiten Hüllwand können vorteilhafterweise gemeinsam realisiert sein, indem in einer ersten Ausführung erste und zweite Hüllwand gleiches erstes Material in gleicher Wanddicke aufweisen und die erste Hüllwand zusätzlich wenigstens einen Streifen aus einem zweiten Material aufweist, welches einen höheren Elastizitätsmodul besitzt. Der wenigstens eine Streifen aus dem zweiten Material kann auf eine durchgehende Schicht der ersten Hüllwand bildendes erstes Material aufgesetzt sein oder in bevorzugter Ausführung in Querrichtung über eine Teilbreite der ersten Hüllwand diese allein bilden.

Die erhöhte Biegesteifigkeit ist vorteilhafterweise nicht gleichmäßig über die gesamte Breite der ersten Hüllwand gegeben, sondern nur oder verstärkt in wenigstens einem von den seitlichen Rändern der ersten Hüllwand in Querrichtung beabstandeten Bereich. Vorzugsweise ist die Biegesteifigkeit der ersten Hüllwand in der in Querrichtung gemessenen Mitte am höchsten. Der Verlauf der Biegesteifigkeit der ersten Querwand ist in Querrichtung vorzugsweise symmetrisch bezüglich einer Mittellängsebene. Die Biegesteifigkeit kann auch in Querrichtung über die Breite der ersten kontinuierlich verändert sein. Ein oder mehrere Bereiche erhöhter Biegesteifigkeit sind vorteilhafterweise in Querrichtung von beiden seitlichen Rändern der ersten Hüllwand beabstandet.

In bevorzugter Ausführung ist in Querrichtung in der Mitte der ersten Hüllwand ein Streifen aus einem zweiten Material vorgesehen, welcher um wenigstens 20 %, insbesondere wenigstens 30 % der Breite der ersten Hüllwand von deren seitlichen Rändern beabstandet ist. Der Streifen aus dem zweiten Material besitzt vorzugsweise eine größere Dicke als die ihn beidseitig umgebenden Bereiche der ersten Hüllwand aus dem ersten Material. Das zweite Material besitzt vorzugsweise eine höhere Shorte-Härte als das erste Material. Vorteilhafterweise weist die Shore-Härte des ersten Materials einen Wert von weniger als 70 Shore, insbesondere weniger als 60 Shore und das zweite Material eine Härte von mehr als 80, insbesondere mehr als 90 auf.

Die Hülle ist vorzugsweise als ein Kunststoff-Strangpressprofil ausgeführt, wobei verschiedene Materialien vorteilhafterweise in einem an sich gebräuchlichen 2-Komponenten-Verfarhen in einem Vorgang eingesetzt werden können und sich dabei an den Grundflächen fest verbinden.

An der Wassertransportleitung ist das Faserband an entgegen gesetzten Enden der Hülle freiliegend, um an einem ersten Ende Wasser aus einem Wasservorratsbehälter aufzunehmen und an einem zweiten Ende Wasser an ein Pflanzsubstrat abzugeben. An dem zweiten Ende ist vorzugsweise ein in das Pflanzsubstrat einsteckbarer Erdspieß angeordnet und mit der Hülle mechanisch verbunden. Der Erdspieß bestimmt vorteilhafterweise für den Gebrauch der Wassertransportleitung in einer Bewässerungseinrichtung zwischen dem Erdspieß und dem Wasservorratsbehälter einen Verlauf der Wassertransportleitung mit einem bevorzugten Krümmungsverlauf mit einem zumindest überwiegenden Biegungssinn, bei welchem die erste Hüllwand der jeweiligen Biegeachse zuweist.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Topfpflanzen-Bewässerungseinrichtung,
- Fig. 2: eine Wassertransportleitung,
- Fig. 3: die Wassertransportleitung nach Fig. 2 in anderer Ansicht,
- Fig. 4: einen Querschnitt durch eine Wassertransportleitung.

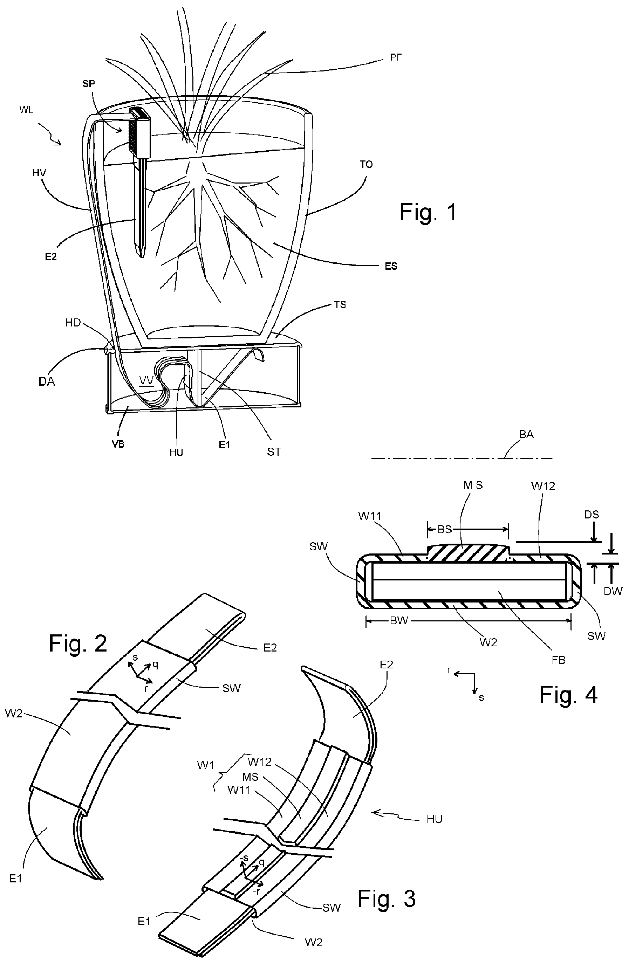

Fig. 1 zeigt in teilweise geschnittener Ansicht eine Topfpflanzen-Bewässerungseinrichtung einschließlich eines Pflanztopfes TO mit einer Pflanze PF, die in einem Pflanzsubstrat ES wurzelt. Der Pflanztopf TO ist auf einer Stellfläche TS der Abdeckung eines Wasservorratsbehälters abgestellt. Die Wasservorratseinrichtung besitzt ein Vorratsvolumen VV in einem topfförmigen Vorratsbehälter VB. Der Behälter VB ist durch eine Deckelanordnung DA überdeckt. Eine Wassertransportleitung WL ist durch eine Durchführung HD in der Deckelanordnung DA aus dem Vorratsvolumen VV hinaus geführt und zu einem Erdspieß SP geleitet, welcher mit einer Spitze in das Pflanzsubstrat ES eingesteckt ist. Die Wassertransportleitung WL enthält insbesondere eine wasserdichte und vorzugsweise auch dampfdichte Hülle HU und innerhalb dieser einen Wasser auf der Basis des Kapillareffekts entgegen der Schwerkraft transportierenden Faserstrang, im skizzierten Beispiel ein Faserband, welches an beiden Enden über die Hülle HU hinaus verlängert ist und mit einem ersten frei liegenden Ende E1 mit Wasser im Vorratsbehälter VB zur Aufnahme von Wasser in Kontakt steht und mit einem zweiten frei liegenden Ende E2 am Erdspieß mit dem Pflanzsubstrat ES zur Abgabe von Wasser an das Pflanzsubstrat in Kontakt steht. Über einen von der Stellfläche TS der Deckelanordnung DA nach unten in das Vorratsvolumen VV ragenden Steg ST ist gewährleistet, dass zumindest ein Teil des frei liegenden ersten Endes E1 des Faserbandes auch bei niedrigem Wasserstand im Vorratsbehälter noch mit Wasser in Kontakt steht.

Die Hülle HU erstreckt sich in Längsrichtung der Wassertransportleitung WL vorteilhafterweise bis zu dem Erdspieß SP und ist dort mechanisch festgelegt, beispielsweise eingeklemmt, wobei die Einklemmung in der Art ist, dass die Hülle HU zugfest am Erdspieß SP gehalten ist, ohne dass aber der Wassertransport durch das Faserband beeinträchtigt ist. Die Verbindung der Hülle HU mit dem Erdspieß SP ist vorzugsweise so, dass der Erdspieß SP mit einer Einführungsöffnung für die Hülle HU eine definierte Ausrichtung des Erdspießes relativ zum oberen Rand des Pflanztopfes TO vorgibt.

Die Wassertransportleitung ist in flacher Form ausgeführt und so mit dem Erdspieß SP verbunden, dass dessen vorgegebene Ausrichtung zum Rand des Pflanztopfes TO zugleich eine definierte Zuordnung einer ersten flachen Hüllwand der Hülle HU im Verlauf zwischen dem Erdspieß SP und der Durchführung HD durch die Deckelanordnung DA des Wasservorratsbehälters zum Pflanztopf TO hin weisend vorgegeben ist. Die der ersten Hüllwand gegenüber liegende flache zweite Hüllwand der flachen Hülle HU weist dann im Verlauf der Hülle vom Erdspieß SP bis zur Durchführung HD in der Deckelanordnung DA vom Pflanztopf TO weg. Durch die derart vorgegebene Ausrichtung der Hüllwände der Hülle HU ist auch der vorwiegende Krümmungssinn des gebogenen Verlaufs der Wassertransportleitung WL bzw. der Hülle HU in dem Abschnitt zwischen Erdspieß SP und Durchführung HD so vorgegeben, dass die Biegeachse einer vom Erdspieß SP zu der Durchführung HD hin gemittelten Krümmung der Hülle HU, welche im skizzierten Beispiel entgegen dem Uhrzeigersinn verläuft, auf der dem Pflanztopf zuweisenden Seite der Hülle HU liegt und somit die erste Hüllwand der Hülle HU einer solchen Biegeachse einer gemittelten Krümmung zu weist und die in Fig. 1 im Verlauf zwischen dem Erdspieß SP und der Durchführung HD schräg sichtbare zweite Hüllwand dieser Biegeachse einer gemittelten Krümmung abgewandt ist.

Durch die erfindungsgemäß höhere Biegesteifigkeit der ersten, dem Pflanztopf TO in Fig. 1 zugewandten Hüllwand der Hülle gegenüber der dem Pflanztopf TO abgewandten Hüllwand der Hülle HU ergibt sich ein vorteilhaftes Biegeverhalten, bei welchem die dem Pflanztopf zuweisende Hüllwand mit der höheren Biegesteifigkeit ein scharfes Abknicken der Wassertransportleitung vermeidet und die Wassertransportleitung vielmehr trotz weiter gegebener Flexibilität einen im wesentlichen knickfreien Verlauf einnimmt. Insbesondere ist durch die Ausrichtung der ersten Hüllwand mit der höheren Biegesteifigkeit zu der Biegeachse der gemittelten Krümmung hin auch vermieden, dass die der Biegeachse zugewandte Hüllwand sich bei engen Biegeradien von dem Faserband weg stülpt.

Fig. 2 zeigt einen Ausschnitt aus einer Wassertransportleitung, wobei die Abmessungen der Hülle HU und des ersten Endes E1 und des zweiten Endes E2 des Faserbandes FB nicht quantitativ zu verstehen sind. Für die Hülle HU ist durch eine Unterbrechung angedeutet, dass die Gesamtlänge der Hülle HU größer ist als eingezeichnet. Auch das erste Ende E1 und das zweite Ende E2 sind typischerweise relativ zu Dicke und Querabmessung der Hülle HU und des Faserbandes wesentlich länger als in der Skizze nach Fig. 2.

Das Faserband FB ist im skizzierten Beispiel als zweilagig angenommen, wobei an dem zweiten Ende E2 des Faserbandes eine Bandumlenkung vorgesehen sein soll, so dass beide Lagen Teil eines einteilig zusammen hängenden Faserband-Stranges sind.

Fig. 2 zeigt eine Schrägansicht mit Blick auf die zweite Hüllwand W2 der Hülle. Fig. 3 zeigt die Wassertransportleitung nach Fig. 2 in einer Ansicht auf die erste Hüllwand W1 der Hülle HU. Fig. 4 zeigt eine Schnittansicht in einer Schnittebene senkrecht zum Längsverlauf der Wassertransportleitung.

In Fig. 2 bis Fig. 4 ist für die Wassertransportleitung, insbesondere die Hülle HU ein internes orthogonales Koordinatensystem mit Koordinaten q, r und s mit eingezeichnet. Die Koordinate q bezeichnet die Längsrichtung der Hülle HU. Die Koordinatenrichtung r ist als Querrichtung bezeichnet und verläuft senkrecht zur Längsrichtung q und parallel zu den Flächen der flächigen bandförmigen Hüllwände W1 und W2 und des Faserbandes FB. Die Koordinate s verläuft parallel zur Richtung der Flächennormalen der Flächen der flachen Hüllwände W1, W2 bzw. des Faserbandes FB. Aufgrund der Flexibilität der Wassertransportleitung sind die Koordinaten q, r, s nur als interne Koordinaten innerhalb der Wassertransportleitung anzusehen, deren Raumrichtung sich je nach Ausrichtung der Wassertransportleitung verändern kann. Als Biegung der Wassertransportleitung WL bzw. der Hülle HU sei für die vorliegende Erfindung lediglich eine Biegung um zur Querrichtung r parallele Biegeachsen verstanden. Eine Torsion des Bandes um die Längsrichtung r ist möglich, für die vorliegende Erfindung aber nicht von besonderem Belang. Eine Biegung um eine zur Koordinatenrichtung s parallele Biegeachse sei aufgrund der großen Ausdehnung der Hüllwände W1, W2 in Querrichtung r von der Betrachtung ausgeschlossen.

Die Hülle HU besitzt einen annähernd rechteckigen Innenquerschnitt, in welchem das Faserband FB vorzugsweise unter leichter elastischer Vorspannung in Normalenrichtung s einliegt. Die in Normalenrichtung s beidseitig des Faserbandes FB parallel zueinander verlaufenden, bandförmig flachen Hüllwände W1 und W2 sind an ihren in Querrichtung r gegenüber liegenden Rändern über Seitenwände SB miteinander verbunden und zu einer geschlossen schlauchförmigen Hülle ergänzt.

Die zweite Hüllwand W2 besitze eine in Querrichtung im wesentlichen konstante Wandstärke DW, welche auch für seitliche Bereiche der ersten Hüllwand W1 als gleich groß angenommen sei und in Fig. 4 mit DW bezeichnet ist. Eine gegenüber der zweiten Hüllwand W2 erhöhte Biegesteifigkeit der ersten Hüllwand W1 ist in dem skizzierten Beispiel dadurch erreicht, dass die erste Hüllwand in den in Querrichtung gegenüber liegenden Rändern zuweisenden Teilbereichen W11, W12 mit der zur Hüllwand W2 gleichen Wandstärke DW und gleichem Material aufgebaut ist. In einem in Querrichtung von beiden Rändern der zweiten Hüllwand beabstandeten und durch die beiden Teilbereiche W11, W12 eingeschlossenen mittleren Bereich ist die erste Hüllwand durch einen Streifen MS aus einem zweiten Material und mit gegenüber DW größerer Wandstärke DS gebildet. Das zweite Material besitzt vorzugsweise neben der größeren Wandstärke DS, welche bei nicht ebener Oberfläche des Streifens MS als mittlere Dicke angenommen sei, vorzugsweise auch einen gegenüber dem ersten Material der Hüllwand W2 größere Shore-Härte. Die Breite BS des streifenförmigen mittleren Bereichs MS beträgt vorteilhafterweise wenigstens 20 %, insbesondere wenigstens 30 % der Breite BW der ersten und zweiten Hüllwand. Die Breite BW ist vorteilhafterweise nicht größer als 60 %, insbesondere nicht größer als 50 % der Breite BW der Hüllwände W1, W2. Die Härte des ersten Materials betrage beispielsweise ca. 55 Shore und die des zweiten Materials ca. 95 Shore.

Zu Fig. 4 ist auch noch beispielhaft die Position einer Biegeachse BA auf der Seite der ersten Hüllwand der schlauchförmigen Hülle eingetragen. Bei einer Biegung der Hülle HU um eine solche Biegeachse BA kann die Hülle mit dem biegesteifen mittleren Streifen MS in der ersten Hüllwand und der geringen Biegesteifigkeit in den seitlichen Bereichen W11, W12 der ersten Hüllwand und der gleichfalls geringeren Biegesteifigkeit in der zweiten Hüllwand vorteilhafterweise eine solche Verformung annehmen, dass eine Wölbung des Hüllenquerschnitts um die in Fig. 4 senkrecht auf der Zeichnung stehende Längsrichtung auftritt und sich die Seitenwände SW im Verlauf der Biegung in Richtung der Biegeachse BA verschieben. Von besonderem Vorteil ist hierbei die auf einen mittleren Bereich MS der ersten Hüllwand beschränkte oder konzentrierte Erhöhung der Biegesteifigkeit.
Die Wandstärke der Seitenwände SW, welche als materialhomogen mit der zweiten Hüllwand W2 und den Teilbereichen W11, W12 der ersten Hüllwand angenommen sind, ist im in Fig. 4 skizzierten Beispiel als gleich zu der zweiten Hüllwand W2 und den Teilbereichen W11, W12 angenommen, kann aber auch davon verschieden sein.

Die Herstellung einer schlauchförmigen flexiblen Hülle nach Art der Fig. 4 kann in bevorzugter Ausführung in Form eines 2-Komponenten-Strangpressverfahrens aus elastischen Kunststoffmaterialien erfolgen, wobei das erste Material für Teilbereiche W11, W12, Seitenwände SW und zweite Hüllwand W2 einerseits und das zweite Material für den mittleren Streifen MS sich an den Grenzflächen zwischen MS und W11 bzw. W12 von Anfang an fest miteinander verbinden.
Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen der nachfolgenden Ansprüche in mancherlei Weise abwandelbar.

## Patentansprüche

1. Wassertransportleitung für die Topfpflanzenbewässerung durch Wassertransport nach dem Kapillareffekt in faserigem Material, wobei
- das faserige Material in Form eines flachen Faserbandes (FB) vorliegt,
- das Faserband (FB) aus dem faserigen Material zwischen den entgegen gesetzten Bandenden (E1, E2) durch eine schlauchförmige, wasserdichte flexible Hülle (HU) mit flachem Innenquerschnitt umgeben ist, wobei die Form der Hülle eine Längsrichtung q der Hülle, eine Flächennormalenrichtung s und eine zu Längsrichtung und Flächennormalenrichtung orthogonale Querrichtung r bestimmt,
- die Enden (E1, E2) der Wassertransportleitung zum wasseraustauschenden Kontakt des Faserbandes (FB) mit Wasser in einem Wasservorratsbehälter (VB) bzw. einem Pflanzsubstrat (ES) ausgebildet sind,
die Hülle (HU) eine erste (W1) und eine zweite (W2) bandförmige Hüllwand enthält, zwischen welchen das Faserband (FB) verläuft und die mit schmalen Seitenwänden (SW) die wasserdichte Hülle (HU) bilden,
- die erste Hüllwand (W1) eine höhere Biegesteifigkeit gegen Durchbiegung um eine in Querrichtung r verlaufende Biegeachse (BA) aufweist als die zweite Hüllwand (W2).

2. Wassertransportleitung nach Anspruch 1, **dadurch gekennzeichnet, dass** die erhöhte Biegesteifigkeit der ersten Hüllwand (W1) durch eine Streifenanordnung mit wenigstens einem in Längsrichtung q verlaufenden Streifen (MS) bewirkt ist, dessen Breite (BS) geringer ist als die Breite (BW) der ersten Hüllwand (W1).

3. Wassertransportleitung nach Anspruch 2, **dadurch gekennzeichnet, dass** die Breite (BS) des wenigstens einen Streifens (MS) oder bei mehreren Streifen deren kumulierte Breite geringer ist als 60 %, insbesondere geringer als 45 % der Breite (BW) der ersten Hüllwand (W1).

4. Wassertransportleitung nach Anspruch 2 oder 3, **dadurch gekennzeichnet, dass** die Streifenanordnung in Querrichtung r symmetrisch zur Mittellängsebene der ersten Hüllwand (W1) ausgeführt ist.

5. Wassertransportleitung nach einem der Ansprüche 1 bis 4, **dadurch gekennzeichnet, dass** die erste Hüllwand (W1) zumindest in einem Teil ihrer Querabmessung eine gegenüber der zweiten Hüllwand größere Wandstärke (DS) aufweist.

6. Wassertransportleitung nach einem der Ansprüche 1 bis 5, **dadurch gekennzeichnet, dass** die erste Hüllwand (W1) zumindest in einem Teil ihrer Querabmessung eine andere Materialzusammensetzung aufweist als die zweite Hüllwand (W2).

7. Wassertransportleitung nach Anspruch 6, **dadurch gekennzeichnet, dass** die erste Hüllwand (W1) teilweise materialhomogen mit der zweiten Hüllwand (W2) aus einem ersten Kunststoffmaterial besteht und zusätzlich zumindest in einem Teil (MS) ihrer Querabmessung ein zweites Kunststoffmaterial enthält.

8. Wassertransportleitung nach Anspruch 7, **dadurch gekennzeichnet, dass** das zweite Material eine höhere Shore-Härte besitzt als das erste Material.

9. Wassertransportleitung nach Anspruch 8, **dadurch gekennzeichnet, dass** in einem Teil (MS) der Querabmessung r der ersten Hüllwand (W1) diese nur durch das zweite Material gebildet ist.

10. Wassertransportleitung nach einem der Ansprüche 6 bis 9, **dadurch gekennzeichnet, dass** die Hülle als ein einteiliger, im 2-Komponenten-Strangpressverfahren hergestellter Kunststoffschlauch ausgebildet ist.

11. Wassertransportleitung nach einem der Ansprüche 1 bis 10, **dadurch gekennzeichnet, dass** das Faserband (FB) aus wenigstens zwei Lagen aufgebaut ist.

12. Wassertransportleitung nach einem der Ansprüche 1 bis 11, **dadurch gekennzeichnet, dass** an einem Ende der Hülle ein Erdspieß (SP) befestigt ist, an welchem ein unverhüllter Abschnitt (E2) des Faserbandes (FB) vorliegt.

13. Bewässerungseinrichtung für Topfpflanzen mit einer Wassertransportleitung nach einem der Ansprüche 1 bis 12, wobei ein erstes Ende (E1) des Faserbandes (FB) in ein Wasservorratsvolumen (VV)des Wasservorratsbehälters (VB) reicht und ein zweites Ende (E2) des Faserbandes (FB) zur Wasserabgabe an ein über dem Niveau des Wasservorratsvolumens gelegenes Pflanzsubstrat (ES) ausgebildet ist und zumindest ein außerhalb des Wasservorratsbehälters bis zu dem zweiten Ende verlaufender Abschnitt des Faserbandes von der Hülle (HU) umgeben ist.

14. Bewässerungseinrichtung nach Anspruch 13, **dadurch gekennzeichnet, dass** die Hülle (HU) durch eine Durchführung (HD) der Wasservorratseinrichtung durchgeführt und in Längsrichtung q relativ zu der Durchführung (HD) verlagerbar und mit einem Stauabschnitt innerhalb des Wasservorratsbehälters (VB) anordenbar ist.

15. Bewässerungseinrichtung nach Anspruch 13 oder 14, **dadurch gekennzeichnet, dass** die Wassertransportleitung (WL) außerhalb der Wasservorratsbehälter (VB) gebogen verläuft und eine überwiegenden Krümmungsrichtung aufweist und die erste Hüllwand (W1) an der Innenseite dieser Krümmungsrichtung liegt und der Biegeachse des gebogenen Verlaufs zugewandt ist.

## Claims

1. Water-transporting line for watering pot plants by transporting water in fibrous material using the capillary effect, wherein
- the fibrous material is present in the form of a flat fibre band (FB),
- the fibre band (FB) made of the fibrous material is enclosed, between the opposite band ends (E1, E2), by a tubular, water-tight flexible casing (HU) of flat inner cross section, wherein the shape of the casing defines a longitudinal direction q of the casing, a surface normal direction s and a transverse direction r, which is orthogonal to the longitudinal direction and surface normal direction,
- the ends (E1, E2) of the water-transporting line are designed for water-exchanging contact of the fibre band (FB) with water in a water-storage container (VB) or a plant substrate (ES),
- the casing (HU) contains a first (W1) and a second (W2) band-form casing wall, between which the fibre band (FB) runs and which form the water-tight casing (HU) by way of narrow side walls (SW),
- the first casing wall (W1) has a higher bending strength, in respect of flexing about a bending axis (BA) running in the transverse direction r, than the second casing wall (W2).

2. Water-transporting line according to Claim 1, **characterized in that** the increased bending strength of the first casing wall (W1) is brought about by a strip arrangement having at least one strip (MS) which runs in the longitudinal direction q and of which the width (BS) is smaller than the width (BW) of the first casing wall (W1).

3. Water-transporting line according to Claim 2, **characterized in that** the width (BS) of the at least one strip (MS) or, in the case of a plurality of strips, of the accumulated width of said strips is smaller than 60%, in particular smaller than 45%, of the width (BW) of the first casing wall (W1).

4. Water-transporting line according to Claim 2 or 3, **characterized in that**, as seen in the transverse direction r, the strip arrangement is configured symmetrically in relation to the centre longitudinal plane of the first casing wall (W1).

5. Water-transporting line according to one of Claims 1 to 4, **characterized in that** the first casing wall (W1), at least over part of its transverse dimension, has a greater wall thickness (DS) than the second casing wall.

6. Water-transporting line according to one of Claims 1 to 5, **characterized in that** the first casing wall (W1), at least over part of its transverse dimension, has a material composition which is different to that of the second casing wall (W2).

7. Water-transporting line according to Claim 6, **characterized in that** the first casing wall (W1), in part made of the same material as the second casing wall (W2), consists of a first plastics material and in addition, at least over part (MS) of its transverse dimension, contains a second plastics material.

8. Water-transporting line according to Claim 7, **characterized in that** the second material has a higher Shore hardness than the first material.

9. Water-transporting line according to Claim 8, **characterized in that**, over a part (MS) of the transverse dimension r of the first casing wall (W1), the latter is formed only by the second material.

10. Water-transporting line according to one of Claims 6 to 9, **characterized in that** the casing is designed in the form of a single-part plastics hose produced by two-component extrusion.

11. Water-transporting line according to one of Claims 1 to 10, **characterized in that** the fibre band (FB) is constructed from at least two layers.

12. Water-transporting line according to one of Claims 1 to 11, **characterized in that** one end of the casing has fastened on it a soil spike (SP), on which a non-encased portion (E2) of the fibre band (FB) is present.

13. Watering device for pot plants, having a water-transporting line according to one of Claims 1 to 12, wherein a first end (E1) of the fibre band (FB) extends into a water-storage volume (VV) of the water-storage container (VB), and a second end (E2) of the fibre band (FB) is designed for discharging water to a plant substrate (ES), which is located above the level of the water-storage volume, and the casing (HU) encloses at least one fibre-band portion which runs outside the water-storage container as far as the second end.

14. Watering device according to Claim 13, **characterized in that** the casing (HU) is fed through a feedthrough (HD) of the water-storage device and can be displaced in the longitudinal direction q relative to the feedthrough (HD) and can have a stowage portion arranged within the water-storage container (VB).

15. Watering device according to Claim 13 or 14, **characterized in that** the water-transporting line (WL) runs in a curved progression outside the water-storage container (VB), and has a predominant direction of curvature, and the first casing wall (W1) is located on the inside of said direction of curvature and is directed towards the axis of the curved progression.

## Revendications

1. Conduite de transport d'eau pour l'arrosage de plantes en pot par transport d'eau par l'effet de capillarité dans un matériau fibreux, dans laquelle
- le matériau fibreux se présente sous la forme d'une bande fibreuse plate (FB),
- la bande fibreuse (FB) composée du matériau fibreux est entourée, entre les extrémités opposées de la bande (E1, E2), par une gaine flexible (HU), étanche à l'eau, en forme de tuyau souple, avec une section transversale intérieure plate, dans laquelle la forme de la gaine détermine une direction longitudinale q de la gaine, une direction normale à la surface s et une direction transversale r orthogonale à la direction longitudinale et à la direction normale à la surface,
- les extrémités (E1, E2) de la conduite de transport d'eau sont configurées pour le contact avec échange d'eau de la bande fibreuse (FB) avec l'eau dans un récipient de réserve d'eau (VB) ou un substrat de plante (ES),
- la gaine (HU) comporte une première (W1) et une deuxième (W2) parois de gaine en forme de bande, entre lesquelles la bande fibreuse (FB) s'étend et qui forment avec leurs côtés latéraux étroits (SW) la gaine étanche à l'eau (HU),
- la première paroi de gaine (W1) présente une rigidité à la flexion à l'égard de la flexion autour d'un axe de flexion (BA) s'étendant dans la direction transversale r plus élevée que celle de la deuxième paroi de gaine (W2).

2. Conduite de transport d'eau selon la revendication 1, **caractérisée en ce que** la rigidité à la flexion plus élevée de la première paroi de gaine (W1) est due à un agencement de bande avec au moins une bande (MS) s'étendant dans la direction longitudinale q, dont la largeur (BS) est plus petite que la largeur (BW) de la première paroi de gaine (W1).

3. Conduite de transport d'au selon la revendication 2, **caractérisée en ce que** la largeur (BS) de ladite au moins une bande (MS) ou, dans le cas de plusieurs bandes, leur largeur cumulée est plus petite que 60 %, en particulier plus petite que 45 % de la largeur (BW) de la première paroi de gaine (W1).

4. Conduite de transport d'eau selon la revendication 2 ou 3, **caractérisée en ce que** l'agencement de bande est réalisé, dans la direction transversale r, de façon symétrique par rapport au plan longitudinal central de la première paroi de gaine (W1).

5. Conduite de transport d'eau selon l'une quelconque des revendications 1 à 4, **caractérisée en ce que** la première paroi de gaine (W1) présente, au moins dans une partie de sa dimension transversale, une épaisseur de paroi (DS) plus importante par rapport à la deuxième paroi de gaine.

6. Conduite de transport d'eau selon l'une quelconque des revendications 1 à 5, **caractérisée en ce que** la première paroi de gaine (W1) présente, au moins dans une partie de sa dimension transversale, une autre composition de matériau que la deuxième paroi de gaine (W2).

7. Conduite de transport d'eau selon la revendication 6, **caractérisée en ce que** la première paroi de gaine (W1) se compose, de façon matériellement homogène avec la deuxième paroi de gaine (W2), d'une première matière plastique et contient en plus, au moins dans une partie (MS) de sa dimension transversale, une deuxième matière plastique.

8. Conduite de transport d'eau selon la revendication 7, **caractérisée en ce que** la deuxième matière présente une dureté Shore plus élevée que la première matière.

9. Conduite de transport d'eau selon la revendication 8, **caractérisée en ce que**, dans une partie (MS) de la dimension transversale r de la première paroi de gaine (W1), celle-ci est formée uniquement par la deuxième matière.

10. Conduite de transport d'eau selon l'une quelconque des revendications 6 à 9, **caractérisée en ce que** la gaine est réalisée sous la forme d'un tuyau souple en une seule pièce, fabriqué par un procédé d'extrusion à deux composants.

11. Conduite de transport d'eau selon l'une quelconque des revendications 1 à 10, **caractérisée en ce que** la bande fibreuse (FB) est constituée d'au moins deux couches.

12. Conduite de transport d'eau selon l'une quelconque des revendications 1 à 11, **caractérisée en ce qu'**une pique de terre (SP) est fixée à une extrémité de la gaine, à laquelle se trouve une section non gainée (E2) de la bande fibreuse (FB).

13. Système d'arrosage pour plantes en pot avec une conduite de transport d'eau selon l'une quelconque des revendications 1 à 12, dans lequel une première extrémité (E1) de la bande fibreuse (FB) plonge dans un volume de réserve d'eau (VV) du récipient de réserve d'eau (VB) et une deuxième extrémité (E2) de la bande fibreuse (FB) est configurée pour céder de l'eau à un substrat de plante (ES) situé au-dessus du niveau du volume de réserve d'eau et au moins une section de la bande fibreuse s'étendant à l'extérieur du récipient de réserve d'eau jusqu'à la deuxième extrémité est entourée par la gaine (HU).

14. Système d'arrosage selon la revendication 13, **caractérisé en ce que** la gaine (HU) est menée à travers un passage (HD) du système de réserve d'eau et est déplaçable dans la direction longitudinale q par rapport au passage (HD) et peut être disposée dans une section de rangement à l'intérieur du récipient de réserve d'eau (VB).

15. Système d'arrosage selon la revendication 13 ou 14, **caractérisé en ce que** la conduite de transport d'eau (WL) s'étend en courbe à l'extérieur du récipient de réserve d'eau (VB) et présente une direction de courbure principale et la première paroi de gaine (W1) est située sur le côté intérieur de cette direction de courbure et est tournée vers l'axe de courbure du tracé courbe.
